# EUROPEAN PATENT SPECIFICATION

(11) **EP 3 085 812 B1**
(45) Date of publication and mention of the grant of the patent: **08.08.2018**
(21) Application number: 14871991.7
(22) Date of filing: 16.12.2014
(51) Int. Cl.: C23C 28/04, C23C 8/24, F16C 33/12, F16D 7/02, F16D 13/62, F16D 69/00, F16D 69/02

(54) **SLIDING MEMBER**
GLEITELEMENT
ÉLÉMENT COULISSANT

(30) Priority: 16.12.2013 JP 2013259077
(43) Date of publication of application: 26.10.2016
(73) Proprietor: Aisin Seiki Kabushiki Kaisha, Kariya-shi, Aichi 448-8650 (JP)
(72) Inventor: YAMANAKA Sayo, Kariya-shi Aichi 448-8650 (JP); SUZUKI Masanori, Kariya-shi Aichi 448-8650 (JP); HASEGAWA Shin, Kariya-shi Aichi 448-8650 (JP); INOSHITA Yoshitaka, Kariya-shi Aichi 448-8650 (JP)
(74) Representative: Kramer Barske Schmidtchen Patentanwälte PartG mbB
(86) International application number: PCT/JP2014/083228
(87) International publication number: WO 2015/093463

(56) References cited:
- JP-A- H07 102 270
- JP-A- H09 136 156
- JP-A- H11 156 992
- JP-A- 2001 074 079
- JP-A- 2001 074 079
- JP-A- 2012 202 414
- US-A- 4 502 581
- US-A1- 2011 297 495
- MARTIN JEAN MICHEL ET AL: "Anti-wear Chemistry of ZDDP and Calcium Borate Nano-additive. Coupling Experiments, Chemical Hardness Predictions, and MD Calculations", TRIBOLOGY LETTERS, BALTZER SCIENCE PUBLISHIERS, NL, vol. 50, no. 1, 9 February 2013 (2013-02-09), pages 95-104, XP035350120, ISSN: 1023-8883, DOI: 10.1007/S11249-013-0108-Z [retrieved on 2013-02-09]
- DATABASE WPI Week 199205 16 December 1991 (1991-12-16) Thomson Scientific, London, GB; AN 1992-037961 XP002762637, -& JP H03 285058 A (ATSUGI UNISIA CORP) 16 December 1991 (1991-12-16)

## Description

### Technical Field

The present invention relates to a sliding member.

### Background Art

In order to absorb torque fluctuations of a power source, e.g., an engine, a torque fluctuation absorbing apparatus is arranged between the power source and a driven body. A typical torque fluctuation absorbing apparatus includes a damper unit configured to absorb torque fluctuations with elastic forces of a spring, a hysteresis unit configured to absorb (suppress) torque fluctuations with hysteresis torque through friction, and a torque limiter unit configured to eliminate torque fluctuations through generation of sliding when the torque fluctuations cannot be absorbed in the damper unit and the hysteresis unit.

The related-art torque limiter unit includes an iron pressure plate and an iron cover plate connected to a power source side, an iron lining plate connected to a driven body side, an urging member configured to urge the pressure plate and the cover plate toward the lining plate, and friction materials interposed between the lining plate and the pressure plate, and between the lining plate and the cover plate, respectively. Then, when an excessive torque fluctuation occurs on the power source side, the pressure plate and the cover plate slide with respect to the lining plate through the friction materials to avoid transmission of the excessive torque fluctuation to the driven body side. At that time, the pressure plate and the cover plate slide with respect to the friction materials against frictional forces occurring between the friction material and the pressure plate, and between the friction material and the cover plate. The torque limiter unit is thus a sliding member configured to cause relative sliding of the two members. Torque fluctuation absorbing apparatus each adopting a sliding member having such a configuration are described in Patent Literatures 1, 2, and 3.

### Citation List

### Patent Literature

[PTL 1] JP 2007-218346 A
[PTL 2] JP 2010-230162 A
[PTL 3] JP 2013-24364 A

US 4,502,581 A discloses a clutch for a vehicle, the clutch having a clutch disk and having an iron member operatively slidably engaging a facing of the clutch disk comprising porous metallic facings provided on both sides of the clutch disk, each of said facings provided on both sides of the clutch disk, each of said facings is impregnated with a rust preventive consisting of at least one compound having a greater ionization potential than iron and being reactable with iron under the influence of heat and moisture, such that the compound reacts with the iron to form a rust prevention film on the iron member which acts as an anode as the iron oxidizes to prevent oxidation of the iron member.

US 2011/0297495 A1 discloses a ferritically nitrocarburized rotational member of a vehicle brake, comprising: a rotational member, including: a friction surface configured for braking engagement with a corresponding friction material, a compound zone disposed at the friction surface, and an exposed surface of the compound zone exposed to an atmosphere, wherein an area of the exposed surface includes from about 0 percent to about 14 percent graphite.

JP 2001-074079 A relates to a friction device.

J. M. Martin et al., Tribol Lett (2013), 50:95-104, disclose a study on the anti-wear chemistry of ZDDP and calcium borate nano-additive, coupling experiments, chemical hardness predictions, and MD calculations.

JP 03-285058 A relates to a surface treatment for a steel member.

### Summary of Invention

### (Technical Problem)

In order to prevent an excessive torque fluctuation from being transmitted to the driven body side, a friction material that may be used in a sliding member, e.g., the above-mentioned torque limiter unit, is required to have high rigidity and such friction characteristics that a moderate frictional force (friction coefficient) is stably generated. Hitherto, such a friction material having high functionality has been provided between two plates (between a lining plate and a pressure plate, for example) as a member separate from both the plates. Therefore, the number of parts forming a sliding member and parts cost are increased. Further, a main constituent of a related-art friction material is in general resin (or glass fiber reinforced resin), and hence the friction material is low in heat resistance and may undergo thermal degradation when used under severe conditions. That is, the related-art sliding member is poor in thermal stability. Further, according to the related-art sliding member, the sliding member is increased in size by the thickness of the friction material, and hence the sliding member cannot be configured in a compact size.

In contrast, when the lining plate (first metal member) and the pressure plate (second metal member) are directly slid over each other without using a friction material therebetween, a frictional force (friction coefficient) during initial sliding is considerably lower than a frictional force (friction coefficient) during steady sliding. For example, when iron plates are rubbed against each other, the friction coefficient during steady sliding when sliding proceeds is about 0.6, whereas the friction coefficient during initial sliding is about 0.3. Therefore, necessary friction characteristics cannot be obtained during initial sliding. Steady sliding refers to sliding performed under a state in which a predetermined amount of abrasion powder is accumulated between sliding surfaces, and initial sliding refers to sliding performed under a state in which the predetermined amount of abrasion powder is not accumulated yet between the sliding surfaces. A sliding member has a sliding state that reaches a steady sliding state through an initial sliding state. The friction coefficient in the steady sliding state is comparatively high and stable.

The present invention has been made in view of the above-mentioned problems and an object of the present invention is to provide a sliding member which can be configured in a compact size and has a high thermal stability, and in which the friction coefficient during initial sliding (initial friction coefficient) is close to the friction coefficient during steady sliding (steady friction coefficient) as compared to a case where iron portions are directly slid over each other.

### (Solution to Problem)

According to the present invention, there is provided a sliding member according to claim 1.

In the sliding member according to the present invention, the first coating layer formed at the sliding surface of the first metal member and the second coating layer formed at the sliding surface of the second metal members slide over each other. The first coating layer is made of iron oxide and the second coating layer is made of zinc phosphate. An initial friction coefficient when said compounds are slid over each other is higher as compared to a case where iron portions are slid over each other. Therefore, the initial friction coefficient is caused to approach the steady friction coefficient. Further, the first coating layer formed at the sliding surface of the first metal member and the second coating layer formed at the sliding surface of the second metal member slide over each other to generate a frictional force, and hence there is no need to provide a friction material as a separate member. Therefore, the sliding member can be configured in a compact size. Moreover, the first coating layer and the second coating layer that slide over each other contain no resin, and hence the thermal stability is high. From the above, according to the present invention, it is possible to provide the sliding member which can be configured in a compact size and has a high thermal stability, and in which the initial friction coefficient is close to the steady friction coefficient.

The surface roughness Ra (arithmetic mean roughness) of the first coating layer is 4 µm or more. The surface roughness Ra of the first coating layer is preferably 6 µm or more. Since the surface roughness Ra of the first coating layer is 4 µm or more, fine irregularities are formed at the surface of the first coating layer and convex portions formed are brought into partial contact with the second coating layer. Therefore, a strong surface pressure acts on the second coating layers at contacts between the first coating layer and the second coating layer. As a result, the first coating layer scrapes the second coating layer during initial sliding and further scrapes a base metal of the second metal member. A force required for the first coating layer to scrape the second coating layer and the base metal of the second metal member (scraping force) contributes to an increase of the frictional force to allow the initial friction coefficient to be further increased. Therefore, the initial friction coefficient can be made substantially the same as the steady friction coefficient. In contrast, when the surface roughness Ra of the first coating layer is less than 4 µm, the scraping force is small, and hence the initial friction coefficient cannot be sufficiently increased. The term "scraping" as used herein refers to "progressively scraping a surface of an opponent material so that abrasion powder generated by scratching the surface of the opponent material remains between the sliding surfaces". Therefore, when the second coating layer and the base metal of the second metal member are scraped by the first coating layer, abrasion powder of the second coating layer and the base metal of the second metal member that have been scraped is accumulated between the sliding surfaces.

Further, when the surface roughness Ra of the first coating layer is 4 µm or more, the second coating layer and the base metal of the second metal member are scraped by the first coating layer at a higher scraping speed. Therefore, time required to reach the steady sliding from the initial sliding is shortened.

Further, a hardened layer (621c) having a higher hardness than that of the first coating layer is formed at the surface of the base metal of the first metal member. Then, the first coating layer is suitably formed on a surface of the hardened layer. This ensures holding of the first coating layer on the hardened layer to prevent the first coating layer from coming off the first metal member. In this case, a base metal (621) of the first metal member is suitably iron. A low-carbon steel is more preferred. Further, the hardened layer may be, for example, a nitride layer formed by nitriding the surface of the base metal of the first metal member.

A surface pressure during sliding of the first metal member and the second metal member over each other is suitably 1 MPa or less. When the surface pressure is 1 MPa or less, abrasion powder can be reliably accumulated between the sliding surfaces. The surface pressure exceeding this range impedes accumulation of abrasion powder between the sliding surfaces or causes sticking of a material, and hence a stable friction coefficient may not be obtained during steady sliding.

Further, the first coating layer is made of iron oxide. Further, the second coating layer is made of zinc phosphate. This allows a sufficiently high friction coefficient to be obtained so as to obtain friction characteristics that are substantially constant and necessary during initial sliding and steady sliding. Further, since the second coating layer is made of zinc phosphate, the surface of the second metal member can also be protected from rust. In this case, it is suitable to subject the second metal member to bonderizing treatment to form a zinc phosphate coating layer serving as the second coating layer at the sliding surface of the second metal member.

Further, the sliding surface of the first metal member and the sliding surface of the second metal member are suitably in contact with each other at all times to prevent abrasion powder accumulated between the sliding surfaces of the first metal member and the second metal member from being scattered. In other words, the first metal member and the second metal member are suitably arranged so that the sliding surfaces of the first metal member and the second metal member do not move away from each other. This more reliably prevents abrasion powder from being scattered from between the sliding surfaces, and hence the steady sliding state can be kept for a long period of time.

### Brief Description of Drawings

FIG. 1 is a partial cross-sectional view for schematically illustrating a configuration of a torque fluctuation absorbing apparatus to be arranged between an engine and a transmission in a vehicle.
FIG. 2 is a cross-sectional view for illustrating details of a torque limiter unit that is incorporated in the torque fluctuation absorbing apparatus illustrated in FIG. 1 according to an embodiment of the present invention.
FIG. 3 is a cross-sectional view for schematically illustrating an internal composition of a first metal member.
FIG. 4 is a cross-sectional view for schematically illustrating an internal composition of a second metal member.
FIG. 5 is a micrograph of the first metal member for showing a cross-section of a vicinity of a first coating layer.
FIG. 6 is a micrograph of the second metal member for showing a cross-section of a vicinity of a second coating layer.
FIG. 7 is a cross-sectional view for schematically illustrating a state of contact between a pressure plate, a cover plate, and a lining plate.
FIG. 8 is a cross-sectional view for schematically illustrating a state of contact between the lining plate, the pressure plate, and the cover plate during steady sliding.
FIG. 9 is a micrograph of a cross-section of a vicinity of sliding surfaces of a sliding member during steady sliding.
FIG. 10 is a graph for showing variations in initial friction coefficient and steady friction coefficient of the sliding member according to the embodiment.
FIG. 11 is a graph for a comparison between variations in friction coefficient of the sliding member according to the embodiment and variations in friction coefficient of a sliding member according to a comparative example.
FIG. 12 is a graph for a comparison between initial friction coefficients of sliding member samples S1 and S2 according to the embodiment and initial friction coefficients of sliding member samples S3 and S4 according to comparative examples.
FIG. 13 is a graph for showing a relationship between a surface roughness of the first coating layers formed in the first metal member of the sliding member according to the embodiment and its initial friction coefficient.
FIG. 14 is a graph for showing limit torque variations of a sample S5 according to an example of the present invention and limit torque variations of a sample S6 according to a comparative example with respect to the number of times of sliding.

### Description of Embodiments

A sliding member according to this embodiment can be applied to devices and parts that require a sliding movement with a fixed sliding resistance force (frictional force). The sliding member according to this embodiment is particularly suitable to parts that require a function of eliminating an excessive force (torque) through sliding or absorbing the excessive force. For example, the sliding member according to this embodiment can be applied to the torque limiter unit or the hysteresis unit of the above-mentioned torque fluctuation absorbing apparatus.

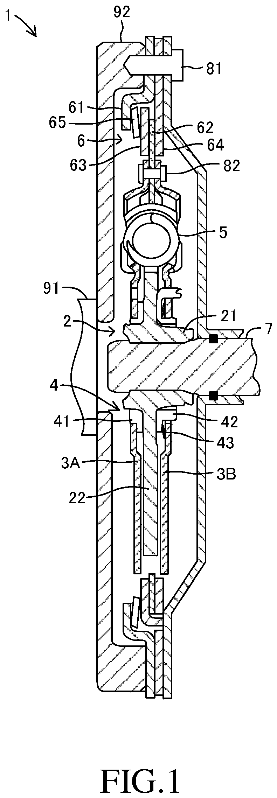

An example in which the sliding member according to this embodiment is applied to a torque limiter unit of a torque fluctuation absorbing apparatus is described. FIG. 1 is a cross-sectional view for schematically illustrating a configuration of a torque fluctuation absorbing apparatus to be arranged between an engine and a transmission in a vehicle.

As illustrated in FIG. 1, the torque fluctuation absorbing apparatus 1 includes a hub 2, two side plates 3A and 3B, a hysteresis unit 4, coil springs 5, and a torque limiter unit.6.

The hub 2 includes a cylindrical portion 21 having internal spline teeth formed on its inner periphery and a flange portion 22 extending radially outward from an outer periphery of the cylindrical portion 21. External spline teeth formed on an outer peripheral surface of an input shaft 7 of the transmission are fitted into the internal spline teeth formed on the inner periphery of the cylindrical portion 21. Therefore, rotation of the hub 2 is transmitted to the input shaft 7 through spline fitting. Further, a plurality of cutout portions are formed on a radially external side of the flange portion 22, and the coil springs 5 are arranged in the cutout portions.

The side plates 3A and 3B are arranged so as to face both surfaces of the flange portion 22, respectively. The side plates 3A and 3B are arranged coaxially, are configured to support an annular lining plate 62 to be described later so as to sandwich the annular lining plate 62 from both side surfaces thereof, and are fixed to the lining plate 62 by rivets 82. Further, the side plates 3A and 3B are mounted to the hub 2 coaxially with the hub 2 in a relatively rotatable manner. Further, the side plates 3A and 3B have a plurality of window holes formed at positions opposed to the cutout portions formed in the flange portion 22 of the hub 2, and the coil springs 5 are accommodated in the plurality of window holes, respectively.

The hysteresis unit 4 is arranged between the hub 2 and the side plates 3A and 3B. The hysteresis unit 4 includes a substantially annular first thrust member 41 arranged between the hub 2 and the side plate 3A, a substantially annular second thrust member 42 arranged between the hub 2 and the side plate 3B, and a disc spring 43 arranged between the side plate 3B and the second thrust member 42. The second thrust member 42 and the first thrust member 41 are pressed against the hub 2 by an elastic force of the disc spring 43. The hysteresis unit 4 generates hysteresis torque between the flange portion 22 of the hub 2 and the side plates 3A and 3B to absorb torque fluctuations.

The torque limiter unit 6 includes a support plate 61, the lining plate 62 (first metal member), a pressure plate 63 (second metal member), a cover plate 64 (second metal member), and a disc spring 65, each of which is formed into an annular shape. The pressure plate 63 and the cover plate 64 are arranged so as to be opposed to each other with the lining plate 62 sandwiched therebetween. Therefore, one surface of the lining plate 62 is in contact with one surface of the facing pressure plate 63 and the other surface of the lining plate 62 is in contact with one surface of the facing cover plate 64.

Further, the support plate 61 has a step formed along its circumferential direction. The support plate 61 is arranged with respect to the pressure plate 63 so that the pressure plate 63 is fitted in space within the step. The support plate 61 and the cover plate 64 are fixed by rivets 81 to a flywheel 92 connected to a drive shaft 91 of the engine. One surface of an inner peripheral portion of the support plate 61 faces the other surface of the pressure plate 63 through the disc spring 65. The pressure plate 63 is urged by the disc spring 65 toward a direction approaching the lining plate 62. Therefore, the pressure plate 63 and the cover plate 64 are pressed against the lining plate 62 with a predetermined force.

An operation of the thus configured torque fluctuation absorbing apparatus 1 is described. When the engine is driven, the support plate 61 rotates integrally with the flywheel 92 in response to driving of the drive shaft 91. When torque fluctuations of the engine are smaller than a predetermined torque limit, the lining plate 62 sandwiched between the pressure plate 63 and the cover plate 64 rotates with the pressure plate 63 and the cover plate 64. Further, the lining plate 62 is connected to the side plates 3A and 3B, and the hysteresis unit 4 is arranged in the side plates 3A and 3B. As described above, the hysteresis unit 4 includes the first thrust member 41, the second thrust member 42, and the disc spring 43, and the first thrust member 41 and the second thrust member 42 are pressed against the flange portion 22 of the hub 2 by the elastic force of the disc spring 43. Further, the hysteresis unit 4 is configured to generate a frictional force through rotation of the first thrust member 41 and the second thrust member 42 relative to the flange portion 22 that is caused by torque fluctuations of the engine. While absorbing torque fluctuations of the engine under the torque limit by the thus generated frictional force and elastic compression of the coil springs 5, driving torque of the engine is transmitted to the input shaft 7 through the side plates 3A and 3B and the hub 2.

When driving torque fluctuations of the engine increase and the torque fluctuations exceed a torque limit value, the pressure plate 63 and the cover plate 64 sandwiching the lining plate 62 therebetween slidably rotate with respect to the lining plate 62. At that time, the pressure plate 63 and the cover plate 64 slide relative to the lining plate 62 against a frictional force generated between the pressure plate 63 and the lining plate 62, and a frictional force generated between the cover plate 64 and the lining plate 62. Therefore, transmission of the torque fluctuations to the input shaft 7 is blocked.

When a frictional force generated in the torque limiter unit 6 is excessively small, slight torque fluctuations cause the torque limiter unit 6 to operate immediately to slide the pressure plate 63 and the cover plate 64 with respect to the lining plate 62, and hence substantial torque transmission to the input shaft 7 is blocked. On the other hand, when the frictional force generated in the torque limiter unit 6 is excessively large, large torque fluctuations are applied to the input shaft 7, which may adversely affect the transmission. Further, when the frictional force generated in the torque limiter unit 6 fluctuates, torque transmitted to the input shaft 7 is not stable. Therefore, the torque limiter unit 6 is configured to stably generate a moderate frictional force.

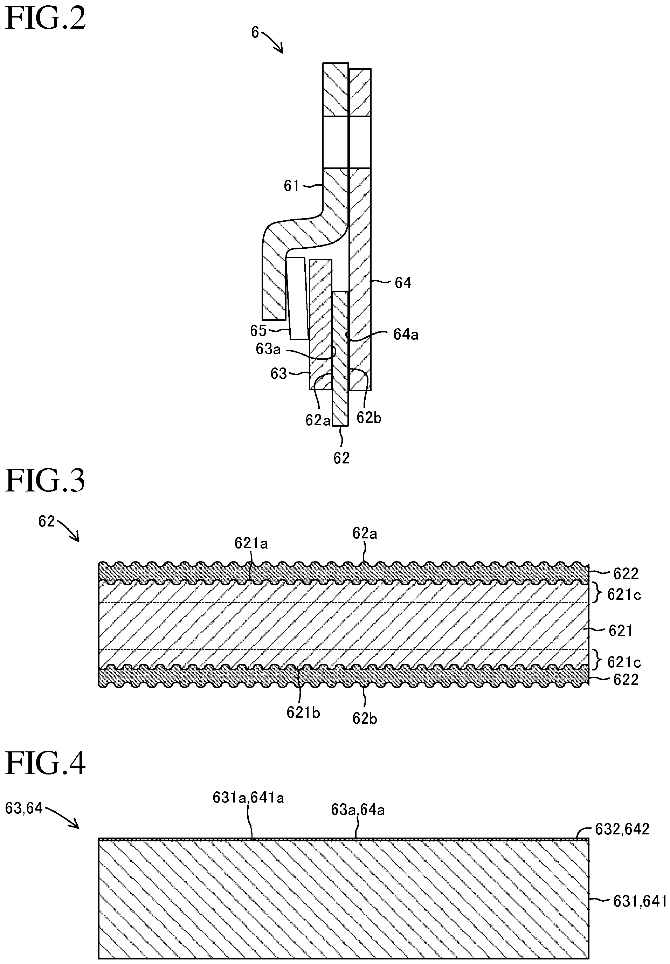

FIG. 2 is a cross-sectional view for illustrating details of the torque limiter unit 6 illustrated in FIG. 1. As described above, the torque limiter unit 6 includes the support plate 61, the lining plate 62, the pressure plate 63, the cover plate 64, and the disc spring 65, each of which is formed into an annular shape. In the following description, the lining plate 62 is also sometimes referred to as a first metal member. Further, the pressure plate 63 and the cover plate 64 are sometimes collectively referred to as a second metal member. Further, the torque limiter unit 6 is also sometimes referred to as a sliding member.

The support plate 61, the lining plate 62, the pressure plate 63, and the cover plate 64 are formed of metal materials to ensure predetermined rigidity. In this embodiment, an inexpensive SPH (hot-rolled steel plate) material is used as a material (base metal) of each of those plates. Specifically, SPH270 is used. The SPH material is a kind of low-carbon steel and has a comparatively low hardness. SPH270 has a hardness Hv (Vickers hardness) of about 100.

The disc spring 65 is interposed between the support plate 61 and the pressure plate 63. Therefore, the pressure plate 63 is pressed against the lining plate 62 by an elastic force of the disc spring 65 with a predetermined pressure. Further, the cover plate 64 is fixed to the flywheel 92 by the rivets 81 in an axially unmovable manner, and hence the lining plate 62 is pressed against the cover plate 64 by the elastic force of the disc spring 65. In other words, the cover plate 64 is pressed against the lining plate 62 with a predetermined pressure. In this case, the surface pressure applied from the pressure plate 63 and the cover plate 64 to the lining plate 62 is 1 MPa or less.

When the torque limiter unit 6 operates, the second metal member slidably rotates with respect to the first metal member. Then, frictional forces are generated between a sliding surface 62a on one side of the lining plate 62 and a sliding surface 63a of the pressure plate 63, and between a sliding surface 62b on the other side of the lining plate 62 and a sliding surface 64a of the cover plate 64. The pressure plate 63 and the cover plate 64 slide against the frictional forces.

When a generated frictional force is unstable, large torque fluctuations may be transmitted to the input shaft 7, as described above. Therefore, it is desired that the generated frictional force (friction coefficient) have a moderate magnitude and be substantially constant. In this embodiment, the torque limiter unit 6 is configured to have a friction coefficient of 0.55 or more and 0.75 or less over a long period of time through formation of coating layers at the sliding surfaces of the respective plates.

FIG. 3 is a cross-sectional view for schematically illustrating an internal composition of the first metal member (lining plate 62). As illustrated in FIG. 3, the first metal member (62) includes a first base metal (base material) 621 made of a metallic material (SPH270) and first coating layers 622. Irregularities are formed in advance by shot blasting at both surfaces 621a and 621b of the first base metal 621. The shot blasting step is followed by hardening of both the surfaces 621a and 621b of the first metal member (62) through nitriding treatment. Therefore, hardened layers (nitride layers) 621c and 621c are formed at both the surfaces 621a and 621b of the first base metal 621. In this embodiment, each of the hardened layers 621c and 621c has a hardness Hv of about 750. The first coating layers 622 and 622 are formed on the hardened layers 621c and 621c, respectively. The first coating layers 622 and 622 make up the sliding surfaces 62a and 62b of the first metal member (62), respectively.

The first coating layers 622 are made of iron oxide. Each of the first coating layers 622 made of iron oxide has a hardness Hv of about 300. The hardness of the first coating layers 622 is lower than that of the hardened layers 621c. The first coating layers 622 are formed by, for example, a gas process, a salt bath process, a plasma process, or other processes.

Fine irregularities are formed by shot blasting at both the surfaces 621a and 621b of the first base metal 621, and hence fine irregularities are also formed at surfaces of the first coating layers 622 so as to reflect the irregularities at the surfaces 621a and 621b. The first coating layers 622 have a surface roughness Ra (arithmetic mean roughness) of 4 µm or more and 50 µm or less. It is not necessary to form irregularities at the surfaces of the first base metal 621 as long as irregularities are formed at the surfaces of the first coating layers 622.

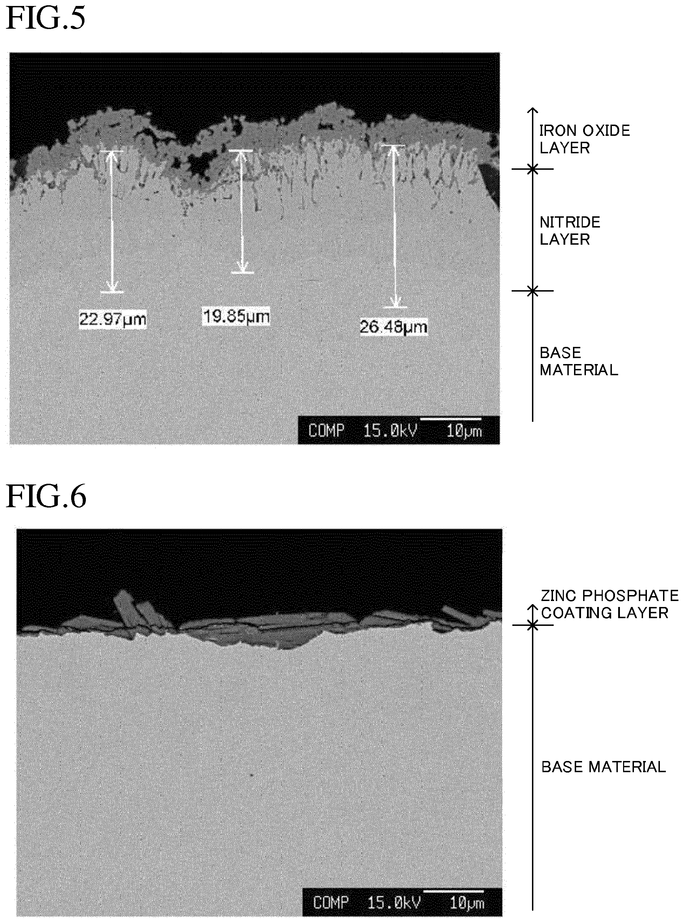

FIG. 5 is a micrograph nf the first metal member (62) for showing a cross-section of a vicinity of the first coating layer 622. As shown in FIG. 5, the nitride layer (hardened layer 621c) having a thickness of about 20 µm is formed at the surface of the base material (first base metal 621) and the iron oxide layer (first coating layer 622) is formed on a surface of the nitride layer (hardened layer 621c).

FIG. 4 is a cross-sectional view for schematically illustrating an internal composition of the second metal member (pressure plate 63, cover plate 64). As illustrated in FIG. 4, the second metal member (63, 64) includes a second base metal (base material) 631 or 641 made of a metallic material (SPH270) and a second coating layer 632 or 642. The second coating layer 632 or 642 is formed on a surface 631a or 641a on one side of the second base metal 631 or 641. The second coating layer 632 or 642 make up the sliding surface 63a or 64a of the second metal member (63, 64).

Each of the second coating layers 632 and 642 is made of zinc phosphate. It is suitable to subject the surfaces 631a and 641a of the second base metals 631 and 641 to bonderizing treatment to form zinc phosphate coatings serving as the second coating layers 632 and 642 at the sliding surfaces 63a and 64a of the second metal member, respectively. The zinc phosphate coatings give rise to a rust-proof effect.

Each of the second coating layers 632 and 642 has a lower hardness than that of the first coating layers 622. In this embodiment, each of the second coating layers 632 and 642 has a hardness Hv of about 150. Therefore, a difference (hardness difference) ΔHv between the hardness of the first coating layers 622 and the hardness of the second coating layers 632 and 642, and a difference ΔHv between the hardness of the first coating layers 622 and the hardness of the second base metals 631 and 641 (SPH270) are each 150 Hv or more. The hardness difference ΔHv is preferably 150 Hv or more. Further, in this embodiment, each of the second coating layers 632 and 642 has a thickness of about 4 µm. The thickness of the second coating layers 632 and 642 is suitably equal to or smaller than a height of surface irregularities of the first coating layers 622, that is, the surface roughness (Ra) of the first coating layers 622.

FIG. 6 is a micrograph of the second metal member (63, 64) for showing a cross-section of a vicinity of the second coating layer 632 or 642. As shown in FIG. 6, the zinc phosphate coating layer (second coating layer 632 or 642) having an average thickness of about 4 µm is formed on the surface of the base material (second base material 631 or 641).

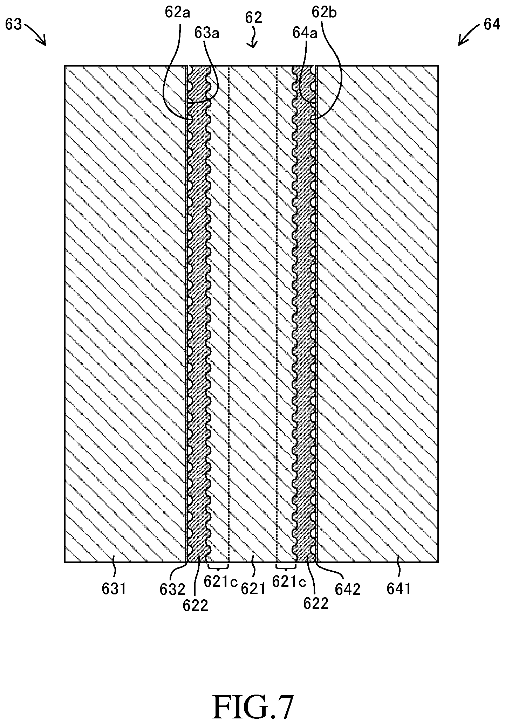

FIG. 7 is a schematic cross-sectional view for schematically illustrating a state of contact between the lining plate 62, the pressure plate 63, and the cover plate 64, each having the above-mentioned composition. As illustrated in FIG. 7, the first coating layer 622 formed at the sliding surface 62a on one side of the lining plate 62 is in contact with the second coating layer 632 formed at the sliding surface 63a of the pressure plate 63 in a face-to-face relationship. Further, the first coating layer 622 formed at the sliding surface 62b on the other side of the lining plate 62 is in contact with the second coating layer 642 formed at the sliding surface 64a of the cover plate 64 in a face-to-face relationship. Sliding interface states during sliding of the first metal member (62) and the second metal member (63, 64) that are thus brought into contact with each other are described below separately at the time of initial sliding and at the time of steady sliding.

### [Initial Sliding]

At the start of sliding, the first coating layers 622 of the first metal member (62) are first brought into friction sliding with the second coating layers 632 and 642 of the second metal member (63, 64). Each of the first coating layers 622 is made of iron oxide and each of the second coating layers 632 and 642 is made of zinc phosphate. A comparatively large frictional force is necessary in order for said compounds to slide over each other. Therefore, a comparatively large frictional force is generated during sliding of those coating layers. Further, the first coating layers 622 each have a surface roughness Ra of 4 µm or more, and the fine irregularities are formed at the surfaces of the first coating layers 622. Therefore, the first coating layers 622 are brought into partial contact with surfaces of the second coating layers 632 and 642 at convex portions formed at their surfaces. Accordingly, when sliding is started, a large surface pressure partially acts on the second coating layers 632 and 642. Further, the hardness of the first coating layers 622 is higher than that of the second coating layers 632 and 642. Therefore, the hard first coating layers 622 are partially rubbed against the second coating layers 632 and 642 to scrape the second coating layers 632 and 642. Further, the presence of the hardened layers 621c under the first coating layers 622 allows the first coating layer 622 side to scrape the second coating layers 632 and 642.

As the first coating layers 622 scrape the second coating layers 632 and 642, the second base metals 631 and 641 of the second metal member (63, 64) are exposed in the course of time. Therefore, the first coating layers 622 also scrape the exposed second base metals 631 and 641. A force required for the first coating layers 622 to scrape the second coating layers 632 and 642, and the second base metals 631 and 641, namely, a scraping force contributes to an increase of the frictional force.

Specifically, during initial sliding, the frictional force is sufficiently increased by the frictional force caused by sliding said compounds over each other, and by the scraping force generated when the first coating layers 622 scrape the second coating layers 632 and 642, and the second base metals 631 and 641. As a result, the friction coefficient during initial sliding (initial friction coefficient) can be sufficiently increased. The sliding member according to this embodiment has an initial friction coefficient of 0.55 or more and 0.75 or less.

### [Steady Sliding]

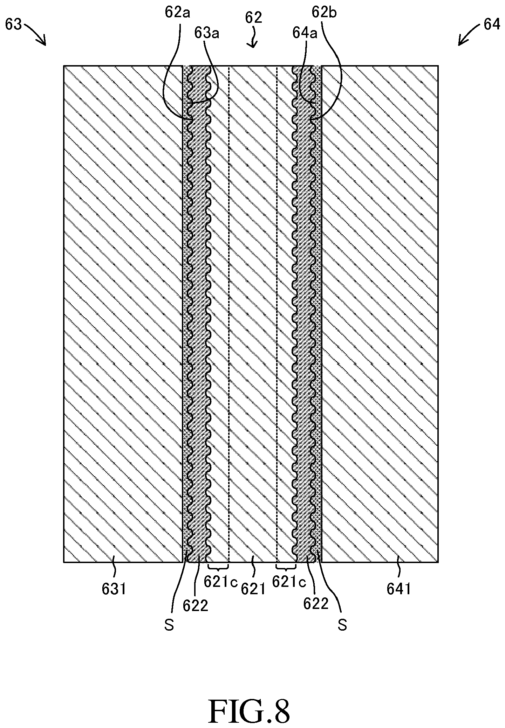

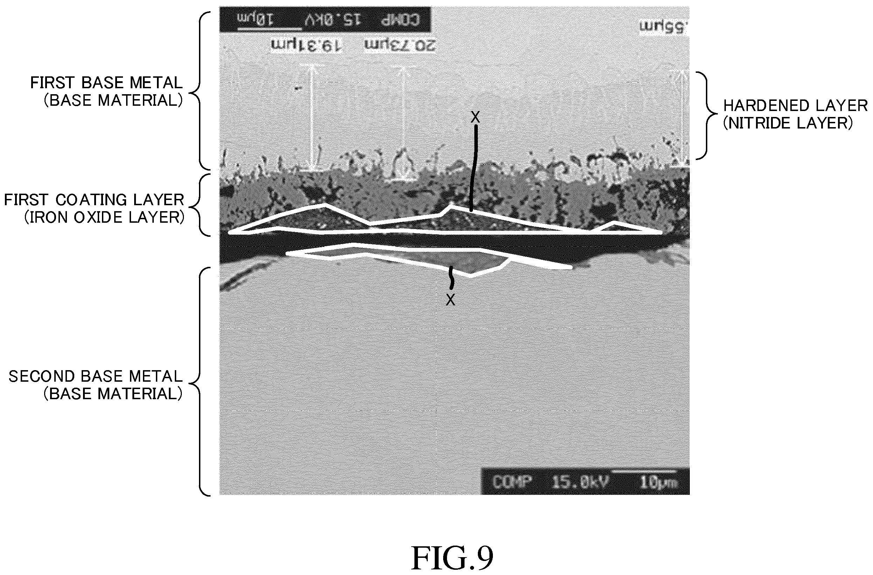

The second coating layers 632 and 642, and the second base metals 631 and 641 scraped during initial sliding are accumulated as abrasion powder between the sliding surfaces of the first coating layers 622 and those of the second base metals 631 and 641. Then, the abrasion powder accumulated between the sliding surfaces reaches a predetermined amount, thus causing sliding of the abrasion powder over the second base metals 631 and 641 or sliding of particles of the abrasion powder over each other. Such sliding is steady sliding. FIG. 8 is a cross-sectional view for schematically illustrating a state of contact between the lining plate 62, the pressure plate 63, and the cover plate 64 during steady sliding. As illustrated in FIG. 8, during steady sliding, abrasion powder S is accumulated on the surfaces of the first coating layers 622 and the surfaces of the second base metals 631 and 641. FIG. 9 is a micrograph of a cross-section of a vicinity of sliding surfaces of a sliding member during steady sliding. In FIG. 9, a region X surrounded by white lines is a portion where abrasion powder is accumulated.

In the steady sliding state, catching and cohesion (sticking) within the sliding surfaces are less liable to occur, and mainly abrasion powder particles slide over each other. Therefore, the friction coefficient is stabilized. Further, a main constituent of the abrasion powder that is present between the sliding surfaces during steady sliding is iron making up the second base metal 641. Therefore, the friction coefficient during steady sliding (steady friction coefficient) is expressed by a friction coefficient during contact between iron powder and iron powder, iron powder and iron, or iron oxide and iron powder. The friction coefficient during steady sliding is comparatively high and is 0.55 or more and 0.75 or less.

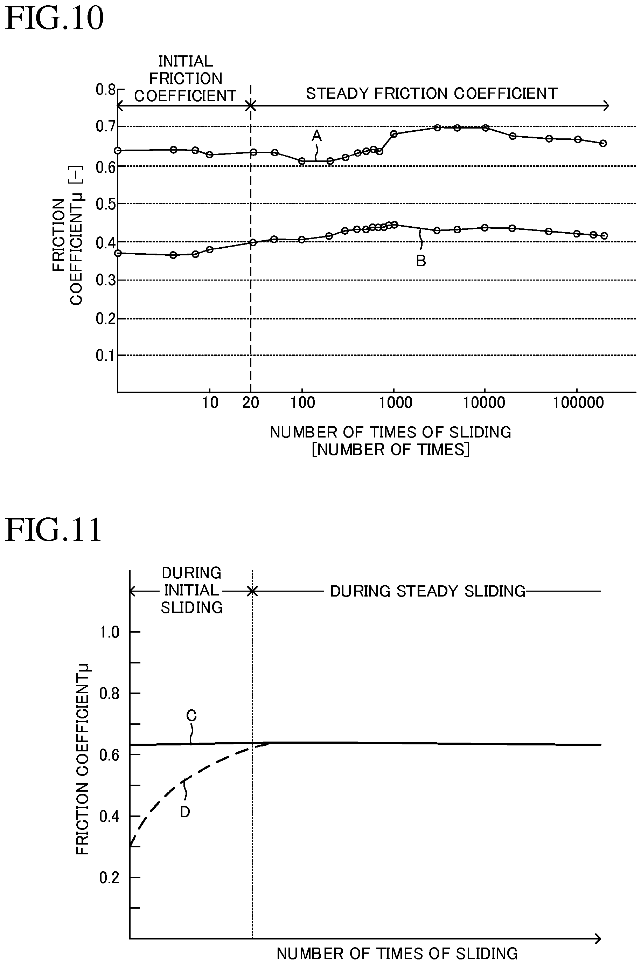

FIG. 10 is a graph for showing variations in initial friction coefficient and steady friction coefficient when a sliding member according to this embodiment is slid 100,000 times or more. In FIG. 10, the horizontal axis is the number of times of sliding and the vertical axis is the friction coefficient. In FIG. 10, a friction coefficient obtained when the number of times of sliding is 20 or less is the initial friction coefficient, and a friction coefficient obtained when the number of times of sliding is 21 or more is the steady friction coefficient. A graph A in FIG. 10 represents variations in initial friction coefficient and steady friction coefficient of the sliding member according to this embodiment. As shown in the graph A, the initial friction coefficient and the steady friction coefficient of the sliding member according to this embodiment are 0.55 or more and 0.75 or less, and both have substantially the same magnitudes. In other words, in the sliding member according to this embodiment, the friction coefficient is stable in a range of 0.55 to 0.75 regardless of the number of times of sliding. A graph B in FIG. 10 represents variations in initial friction coefficient and steady friction coefficient of a related-art sliding member using a friction material. As is seen from a comparison between the graph A and the graph B, the initial friction coefficient and the steady friction coefficient of the sliding member according to this embodiment are higher than those of the related-art sliding member.

FIG. 11 is a graph for a comparison between variations in friction coefficient of a sliding member according to this embodiment (graph C) and variations in friction coefficient of a sliding member according to a comparative example (graph D). In FIG. 11, variations in friction coefficient of the sliding member according to this embodiment are shown in the graph C indicated by the solid line. The graph C schematically represents the graph shown in FIG. 10. As shown in the graph C, in the sliding member according to this embodiment, the initial friction coefficient and the steady friction coefficient are both in a range of 0.55 to 0.75. Further, variations in friction coefficient when the first base metal 621 (SPH270) of the first metal member (62) and the second base metals 631 and 641 (SPH270) of the second metal member (63, 64) are directly slid over each other are shown in the graph D indicated by the broken line. According to the graph D, the friction coefficient is 0.3 at the start of sliding but increases with increasing number of times of sliding, and reaches approximately 0.6 when the steady sliding state is reached. In other words, the initial friction coefficient of the sliding member according to the comparative example shown by the graph D is considerably lower as compared to the steady friction coefficient. In contrast, the initial friction coefficient of the sliding member according to this embodiment shown by the graph C is approximately the same as the steady friction coefficient. From this, the sliding member according to this embodiment increases the initial friction coefficient to allow the initial friction coefficient to approach the steady friction coefficient as compared to the case of direct sliding of iron. Therefore, the friction coefficient can be kept at a fixed high value over the whole area during initial sliding and steady sliding.

### [Comparison of Initial Friction Coefficient]

Sliding member samples S1 and S2 according to this embodiment and sliding member samples S3 and S4 according to comparative examples were prepared. Each sample includes the first metal member and the second metal member made of SPH270, and is configured such that a sliding surface of the first metal member and a sliding surface of the second metal member are slid over each other. Further, the first metal member included in the sample S1 has iron oxide coating with a surface roughness Ra of 4 µm formed at the sliding surface, and the second metal member included in the sample S1 has zinc phosphate coating formed at the sliding surface. Further, the first metal member included in the sample S2 has surface-unroughened iron oxide coating (with a small surface roughness) formed at the sliding surface, and the second metal member included in the sample S2 has zinc phosphate coating formed at the sliding surface. Further, the second metal member included in the sample S3 has zinc phosphate coating formed at the sliding surface. No coating is formed at the sliding surfaces of the metal members other than the above-mentioned metal members. Therefore, in the sample S1 and the sample S2, the iron oxide coating and the zinc phosphate coating slide over each other, in the sample S3, iron (SPH270) and the zinc phosphate coating slide over each other, and in the sample S4, iron (SPH270) and iron (SPH270) slide over each other.

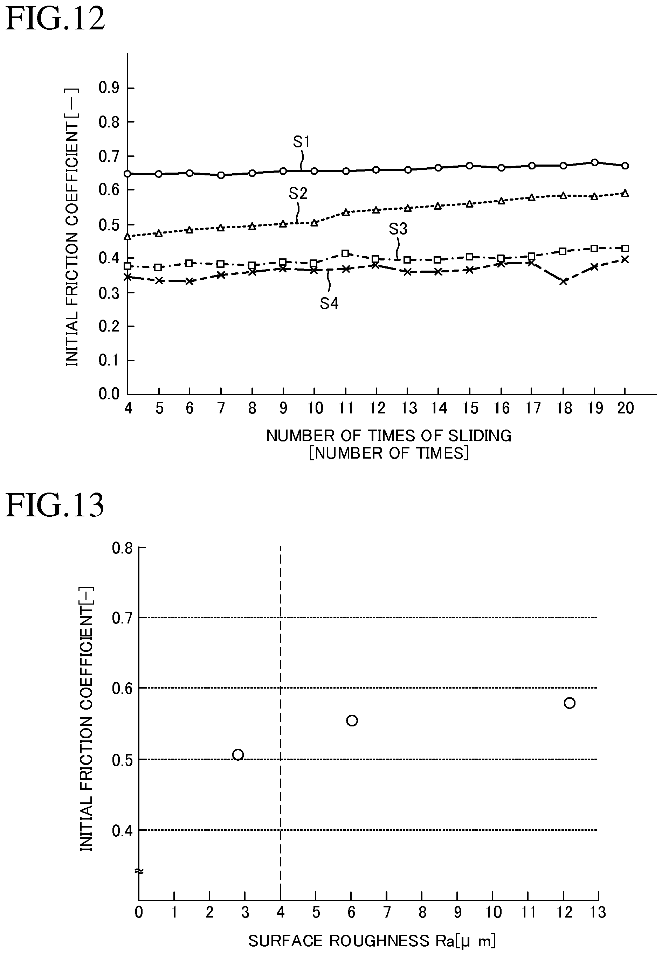

Each time the first metal member and the second metal member of each of the above-mentioned samples were slid over each other, the friction coefficient was measured as the initial friction coefficient. Such measurement of the initial friction coefficient was performed until the number of times of sliding reached 20. FIG. 12 is a graph for a comparison of the initial friction coefficient in each sample. In FIG. 12, the horizontal axis is the number of times of sliding and the vertical axis is the initial friction coefficient. Further, in FIG. 12, a graph S1 represents the initial friction coefficient of the sample S1, a graph S2 represents the initial friction coefficient of the sample S2, a graph S3 represents the initial friction coefficient of the sample S3, and a graph S4 represents the initial friction coefficient of the sample S4.

The initial friction coefficient of the sample S1 shown by the graph S1 is about 0.65 and the initial frictional coefficient is substantially constant regardless of the number of times of sliding. The initial friction coefficient of the sample S2 shown by the graph S2 is about 0.45 to 0.6 and the initial frictional coefficient tends to increase with increasing number of times of sliding. The initial friction coefficient of the sample S3 shown by the graph S3 is about 0.35 and the initial frictional coefficient of the sample S4 shown by the graph S4 is about 0.4, and the initial friction coefficients of both the samples also slightly increase with increasing number of times of sliding.

As shown in FIG. 12, the sliding members (samples S1 and S2) according to this embodiment have sufficiently high initial friction coefficients as compared to the sliding members (samples S3 and S4) according to the comparative examples.

In each sample, the steady friction coefficient is about 0.55 to 0.75. Therefore, the initial friction coefficient of the sample S1 is found to be substantially the same as the steady friction coefficient. Further, the initial friction coefficient of the sample S2 is found to approach the steady friction coefficient more as compared to the initial friction coefficients of the samples S3 and S4.

### [Relationship between Surface Roughness of First Coating Layers and Initial Friction Coefficient]

FIG. 13 is a graph for showing a relationship between the initial friction coefficient and a surface roughness (Ra) of the first coating layers 622 formed at the first metal member (62) in the sliding member according to this embodiment. It is seen from FIG. 13 that as the surface roughness (Ra) of the first coating layers 622 becomes larger, the initial friction coefficient becomes higher. Further, when the surface roughness Ra of the first coating layers 622 is less than 4 µm, the initial friction coefficient is less than 0.55 and is slightly lower than the steady friction coefficient (0.55 to 0.75). In contrast, when the surface roughness Ra of the first coating layers 622 is 4 µm or more, the initial friction coefficient is 0.55 or more and is substantially the same as the steady friction coefficient (0.55 to 0.75). According to those results, when the surface roughness Ra of the first coating layers 622 is 4 µm or more, the initial friction coefficient can be made substantially the same as the steady friction coefficient. In particular, when the surface roughness Ra of the first coating layers 622 is 6 µm or more, the initial friction coefficient can have almost reliably the same magnitude as that of the steady friction coefficient.

### [Evaluation of Stability of Friction Coefficient]

A sliding member sample S5 according to this embodiment and a sliding member sample S6 according to a comparative example were prepared. In this regard, the first metal member (62) included in the sample S5 has iron oxide coatings with a surface roughness Ra of 4 µm or more formed at the sliding surfaces thereof as the first coating layers 622, and the second metal member (63, 64) included in the sample S5 has zinc phosphate coatings formed at the sliding surfaces thereof as the second coating layers 632 and 642, respectively. Further, the first metal member (62) included in the sample S6 has surface-unroughened iron oxide coatings (with a small surface roughness) formed at the sliding surfaces thereof, respectively. Further, no coating is formed at the sliding surfaces of the second metal member (63, 64) included in the sample S6. Further, the base metal of the first metal member (62) and the base metal of the second metal member (63, 64) included in the sample S5 are both SPH270. In contrast, the base metal of the first metal member (62) included in the sample S6 is a low-carbon steel (SPH, SPC270 or the like) and the second metal member (63, 64) included in the sample S6 includes cast iron.

Then, the sliding surfaces of the first metal member (62) and the sliding surfaces of the second metal member (63, 64) included in each of the prepared samples were repeatedly slid over each other. Then, torque required in sliding was measured as limit torque, and variations in limit torque with respect to the number of times of sliding were examined.

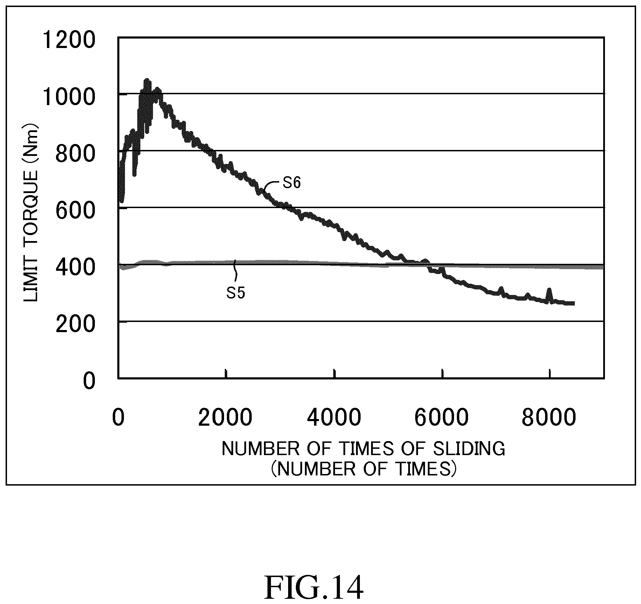

FIG. 14 is a graph for showing limit torque variations of the sample S5 and the sample S6 with respect to the number of times of sliding. In FIG. 14, limit torque variations of the sample S5 with respect to the number of times of sliding are shown by a graph S5, and limit torque variations of the sample S6 with respect to the number of times of sliding are shown by a graph S6. In this regard, the limit torque is proportional to the frictional force (friction coefficient) of the sliding member but also depends on other parameters (load for pressing, operating diameter, and the like). In this example, the respective parameters and the materials of the metal members to be slid are determined so that the respective samples generate limit torque having substantially the same magnitude. Therefore, the magnitude itself of the limit torque does not serve as an index in evaluating the respective samples. In FIG. 14, the magnitude of the limit torque variations with respect to the number of times of sliding serves as an index in evaluating the stability of the friction coefficients of the respective samples.

As is seen from FIG. 14, the limit torque measured when the sample S6 is used considerably varies depending on the number of times of sliding and is not stable. In contrast, the limit torque measured when the sample S5 is used is substantially constant regardless of the number of times of sliding. It is seen from this that the iron oxide coatings formed at the sliding surfaces of the first metal member (62) has a surface roughness Ra of 4 µm or more, and that formation of the zinc phosphate coatings at the sliding surfaces of the second metal member (63, 64) considerably contributes to stabilization of the friction coefficient.

As described above, the sliding member (torque limiter unit 6) according to this embodiment includes the first metal member (lining plate 62) and the second metal member (pressure plate 63, cover plate 64) pressed against the first metal member with a predetermined pressure, and is configured such that the first metal member and the second metal member are slid relative to each other. Further, the first metal member includes, at the sliding surfaces thereof, the first coating layers 622 each made of iron oxide, and the second metal member includes, at the sliding surfaces thereof, the second coating layers 632 and 642 each made of zinc phosphate.

In the sliding member according to this embodiment, said compounds are slid over each other to allow the initial friction coefficient to be increased, thereby being capable of causing the initial friction coefficient to approach the steady friction coefficient. Further, there is no need to provide a friction material as a separate member, and hence the sliding member can be configured in a compact size. Moreover, the first coating layers 622 and the second coating layers 632 and 642 that slide over each other contain no resin, and hence the thermal stability of the sliding member can be enhanced.

Further, the surfaces of the first coating layers 622 are roughened and have a surface roughness Ra of 4 µm or more. Therefore, during initial sliding, the first coating layers 622 scrape the second coating layers 632 and 642, and the second base metals 631 and 641. The force required for the first coating layers 622 to scrape the second coating layers 632 and 642, and the second base metals 631 and 641 (scraping force) contributes to an increase of the frictional force to allow the friction coefficient during initial sliding to be made higher, and as a result, the initial friction coefficient can be made substantially the same as the steady friction coefficient.

Further, the hardness of the first coating layers 622 is higher than that of the second coating layers 632 and 642, and that of the second base metals 631 and 641, and hence the second coating layers 632 and 642, and the second base metals 631 and 641 are scraped reliably during sliding. Therefore, the constituents of the first coating layers 622 are not mixed into the abrasion powder. Therefore, changes in constituent composition of the abrasion powder due to mixing of the constituents of the first coating layers 622 into the abrasion powder can be prevented to further stabilize the frictional force during steady abrasion.

Further, the hardened layers 621c having higher hardness than that of the first coating layers 622 are formed at the surfaces 621a and 621b of the first base metal 621, and the first coating layers 622 are formed on the surfaces of the hardened layers 621c. Therefore, the first coating layers 622 are securely supported on the first base metal 621 to prevent the first coating layers 622 from coming off the first metal member.

Further, the surface pressure during sliding of the first metal member and the second metal member over each other is 1 MPa or less. Therefore, abrasion powder generated by the first coating layers 622 can be reliably accumulated between the sliding surfaces.

Further, according to this embodiment, the compound making up each of the first coating layers 622 is iron oxide, and the compound making up each of the second coating layers 632 and 642 is zinc phosphate. When the first coating layers 622 and the second coating layers 632 and 642 are made up of the compounds of such a combination, the friction coefficient that can be obtained during initial sliding and steady sliding is substantially constant and sufficiently high. Further, the compound making up each of the second coating layers 632 and 642 is zinc phosphate, and hence the surfaces of the second metal member can also be protected from rust.

The embodiment of the present invention has been described above but the present invention should not be construed as being limited to the above-mentioned embodiment. For example, an example in which a sliding member according to the present invention is applied to a torque limiter unit of a torque fluctuation absorbing apparatus has been described in the above-mentioned embodiment. However, the sliding member according to the present invention can also be applied to a hysteresis unit or other portions. Alternatively, the sliding member according to the present invention can also be applied to other apparatus than the torque fluctuation absorbing apparatus.

## Claims

1. A sliding member (6), comprising:
a first metal member (62); and
a second metal member (63, 64) pressed against the first metal member (62) with a predetermined pressure,
the sliding member (6) being configured such that the first metal member (62) and the second metal member (63, 64) are slid relative to each other,
the first metal member (62) comprising, at a sliding surface thereof, a first coating layer (622),
the second metal member (63, 64) comprising, at a sliding surface thereof, a second coating layer (632, 642), wherein
the first coating layer (622) has a surface roughness Ra of 4 µm or more,
a hardened layer (621c) having a higher hardness than that of the first coating layer (622) is formed at the surface (621a, 621b) of the base metal (621) of the first metal member (62),
the first coating layer (622) is formed on the hardened layer (621c),
the first coating layer (622) is made of iron oxide,
the second coating layer (632, 642) is made of zinc phosphate, and
the second coating layer (632, 642) has a lower hardness than that of the first coating layer (622).

## Patentansprüche

1. Gleitelement (6), umfassend:
ein erstes Metallelement (62); und
ein zweites Metallelement (63, 64), das mit einem vorgegebenen Druck gegen das erste Metallelement (62) gedrückt wird,
wobei das Gleitelement (6) so ausgebildet ist, dass das erste Metallelement (62) und das zweite Metallelement (63, 64) relativ zueinander gleiten können,
wobei das erste Metallelement (62) an einer Gleitoberfläche davon eine erste Beschichtungsschicht (622) umfasst,
das zweite Metallelement (63, 64) an einer Gleitoberfläche davon eine zweite Beschichtungsschicht (632, 642) umfasst, wobei
die erste Beschichtungsschicht (622) eine Oberflächenrauheit Ra von 4 µm oder mehr aufweist,
eine gehärtete Schicht (621c) mit einer größeren Härte als derjenigen der ersten Beschichtungsschicht (622) an der Oberfläche (621a, 621b) des Basismetalls (621) des ersten Metallelements (62) ausgebildet ist,
die erste Beschichtungsschicht (622) auf der gehärteten Schicht (621c) ausgebildet ist,
die erste Beschichtungsschicht (622) aus Eisenoxid hergestellt ist,
die zweite Beschichtungsschicht (632, 642) aus Zinkphosphat hergestellt ist, und
die zweite Beschichtungsschicht (632, 642) eine geringere Härte aufweist als diejenige der ersten Beschichtungsschicht (622).

## Revendications

1. Élément coulissant (6), comprenant :
un premier élément métallique (62) ; et
un deuxième élément métallique (63, 64) pressé contre le premier élément métallique (62) avec une pression prédéterminée,
l'élément coulissant (6) étant configuré de sorte que le premier élément métallique (62) et le deuxième élément métallique (63, 64) soient coulissés l'un par rapport à l'autre,
le premier élément métallique (62) comprenant, sur une surface coulissante de celui-ci, une première couche de revêtement (622),
le deuxième élément métallique (63, 64) comprenant, sur une surface coulissante de celui-ci, une deuxième couche de revêtement (632, 642), dans lequel
la première couche de revêtement (622) a une rugosité de surface Ra de 4 µm ou plus,
une couche durcie (621c) ayant une dureté supérieure à celle de la première couche de revêtement (622) est formée sur la surface (621a, 621b) du métal de base (621) du premier élément métallique (62),
la première couche de revêtement (622) est formée sur la couche durcie (621c),
la première couche de revêtement (622) est réalisée en oxyde de fer,
la deuxième couche de revêtement (632, 642) est réalisée en phosphate de zinc, et
la deuxième couche de revêtement (632, 642) a une dureté inférieure à celle de la première couche de revêtement (622).
